# EUROPÄISCHE PATENTSCHRIFT

(11) **EP 3 025 076 B1**
(45) Veröffentlichungstag und Bekanntmachung des Hinweises auf die Patenterteilung: **13.01.2021**
(21) Anmeldenummer: 14753202.2
(22) Anmeldetag: 23.07.2014
(51) Int. Cl.: F16H 63/32

(54) **SCHALTGABEL**
SHIFT FORK
FOURCHETTE DE BOÎTE DE VITESSE

(30) Priorität: 23.07.2013 DE 102013107890
(43) Veröffentlichungstag der Anmeldung: 01.06.2016
(73) Patentinhaber: Koki Technik Transmission Systems GmbH, 09300 Niederwürschnitz (DE)
(72) Erfinder: SCHULZE, Bernd, 09366 Niederdorf (DE)
(74) Vertreter: Patentanwälte und Rechtsanwalt Weiß, Arat & Partner mbB
(86) Internationale Anmeldenummer: PCT/EP2014/002008
(87) Internationale Veröffentlichungsnummer: WO 2015/010784

(56) Entgegenhaltungen:
- WO-A1-2004/079232
- DE-A1-102008 006 843
- DE-A1-102008 059 827
- DE-A1-102008 064 221
- DE-U1-202009 017 006

## Beschreibung

Die vorliegende Erfindung betrifft eine Schaltgabel-Anordnung nach dem Oberbegriff des Anspruchs 1.

### Stand der Technik

Aus dem Stand der Technik sind verschiedene Schaltgabeln bekannt und gebräuchlich. In diesem Zusammenhang wird auf die DE 20 2009 017 006 U1 hingewiesen. Dort ist ein Schaltgestänge offenbart, bei der das Schaltrohr mit der Schaltgabel verschweisst ist, wobei die Schaltgabel hier aus Draht ausgebildet sein kann, um eine Gewichtsersparnis zu erhalten.
Weiter wird auf die DE 10 2008 064 221 A1 hingewiesen, welche ebenfalls eine Schaltgabel aus einer Stabstruktur oder eines Drahts aufweist. Daneben wird auch auf die WO 2004/079232 A1 hingewiesen, welche eine Schaltgabel aus Blech mit einer Führung offenbart. Ausserdem wird auf die DE 10 2008 059 827 A1 hingewiesen, in der ein Gleitschuh offenbart wird, der ein Sicherungselement aus Draht umfasst. Schließlich ist noch die DE 10 2008 006843 A1 zu nennen, in der eine Synchronisationseinrichtung eines Gangräderwechselgetriebes offenbart wird, wobei zwischen einem Schaltelement und einem Synchronring ein Axiallager angeordnet ist.

### Aufgabe der Erfindung

Aufgabe der Erfindung ist es eine Schaltgabel-Anordnung zur Verfügung zu stellen, welche bei geringen Kosten eine hohe Langlebigkeit erreicht.

### Lösung der Aufgabe

Zur Lösung der Aufgabe führen die Merkmale nach Anspruch 1.

Eine erfindungsgemässe Schaltgabel-Anordnung, eine Kombination aus Schaltgabel und Schaltstange, dient zur Schaltung der Gänge in einem Fahrzeuggetriebe. Die Schaltgabel ist hierbei vorgesehen zur Verbindung mit einer Schaltstange. Die Schaltstange wiederum dient der Übertragung der Schaltbewegungen des Nutzers auf die Schaltgabel. Die erfindungsgemässe Schaltgabel wird aus Zweckmäßigkeitsgründen in einen ersten Gabelschenkelabschnitt und eine zweiten Gabelschenkelabschnitt unterteilt. Die Schaltgabel an sich ist regelmäßig einstückig ausgebildet.

Die erfindungsgemässe Schaltgabel umfasst einen Draht. Der Draht selbst ist eine Stabelement, dass je nach Durchmesser über eine höhere oder weniger hohe Steifigkeit verfügt. Umfassen bedeutet hierbei, dass der Draht an die Schaltgabel gefügt ist. Es ist aber auch denkbar, dass der Draht auf eine andere Art und Weise mit der Schaltgabel verbunden wird. Neben dem Fügen in Form des Verschweissens, kommen auch andere Möglichkeiten der Verbindung in Betracht. Beispielsweise kann der Draht auch per Kleben mit der Schaltgabel verbunden werden. Der Draht besteht hier bevorzugt aus einem metallenen Werkstoff. Es ist aber auch denkbar, dass Kunststoff oder Mischwerkstoffe aus Metall und Kunststoff eingesetzt werden. Der Draht dient dem Abstützen und der Stabilisierung gegenüber der Schaltstange.

Der Draht weist auch Prägungen auf. Die Prägungen können dabei unterschiedliche Aufgaben erfüllen. Die Prägungen erleichtern das Anspritzen von Kunststoffpatten. Auch ist ein Prägen in bestimmten Bereichen des Drahtes sinnvoll, um speziellen Anforderungen an die Bauteilsteifigkeit zu erfüllen. In jedem Fall wird gemäss der vorliegenden Erfindung durch ein Anprägen des Drahtes die Fügeverbindung zur flachen Blechgabel verbessert.

Der Draht ist dabei derart ausgeführt, dass der Draht sich von dem ersten Gabelschenkelabschnitt zu dem zweiten Gabelschenkelabschnitt erstreckt. Dies bedeutet im Einzelnen, dass der Draht einends über einen ersten Verbindungsbereich an dem ersten Gabelschenkelabschnitt angefügt ist und andernends über einen zweiten Verbindungsbereich an dem zweiten Gabelschenkelabschnitt angefügt ist. Dazu spreizt sich der Draht in einem Ausführungsbeispiel von einem ersten Gabelschenkelabschnitt ab, vollzieht einen im wesentlichen bogenförmigen Verlauf und neigt sich dann zu dem zweiten Gabelschenkelabschnitt wieder hin.

Dabei weist der Draht einen Kopplungsbereich auf. Dazu verläuft der Draht in seinem im Wesentlichen bogenförmigen Verlauf abschnittsweise geradlinig. Dieser geradlinige verlaufende Kopplungsbereich ist dabei derart ausgestaltet, als dass er sich im Wesentlichen parallel zu der Schaltgabel anordnet. Der Kopplungsbereich dient dabei zur Verbindung mit einer Ausnehmung der Schaltstange.

Die Schaltstange ist zur Verwendung für ein Schaltgetriebe eines Fahrzeugs vorgesehen. Die Schaltstange dient zur Verbindung mit der erfindungsgemässen Schaltgabel. Die Schaltstange weist dabei die Ausnehmung auf, welche zur verbindenden Aufnahme des Kopplungsbereichs des Drahts dient. Dabei ist der Kopplungsbereich beispielsweise in die Ausnehmung klemmend einbringbar. Es ist aber auch denkbar, dass der Draht am Kopplungsbereich in der Ausnehmung verbindbar ist. Es ist aber auch denkbar, dass der Draht im Kopplungsbereich mit der Schaltstange verbindbar ist. Die Verbindung kann hierbei durch Fügetechniken, wie Verschweissen oder Kleben oder dergleichen geschehen.

Der Einsatz des Drahts hat den Vorteil, dass die Schaltgabel besonders einfach und auch mit einem besonders geringen Gewicht hergestellt werden kann. Denn entsprechende Herstellungsschritte zur Stabilisierung der Schaltgabel werden erspart und die Schaltgabel wird trotzdem stabil an der Schaltstange gehaltert.

Ferner hat diese besonders leichte Schaltgabel den Vorteil, dass Fahrzeuge, in denen diese Schaltgabel verwendet wird, weniger Energie durch die besonders leichte Ausgestaltung der erfindungsgemässen Schaltgabel verbrauchen bzw, die entsprechende Gewichtsreduzierung durch die Schaltgabel vorteilhaft anderswo benutzt werden kann. Daher können auch Fahrzeuge mit der erfindungsgemässen Schaltgabel-Anordnung umweltfreundlicher betrieben werden.

Ferner ermöglicht die Verwendung eines Drahts oder einer Stabstruktur eine Schaltgabel bereitzustellen, die im Vergleich zu Schaltgabeln aus Blechmaterial besonders leicht ist.

Die Stabstruktur kann aus einem Stabelement gebildet sein, das mehrfach gekrümmt ist. Dieses Stabelement kann einzeln oder mehrteilig vorliegen.

Die verwendeten Stabelemente können für sich allein aber auch nur gemeinsam die notwenige Steifigkeit aufweisen. Wesentlich hierbei ist nur, dass die Stabelemente die erforderlichen Biegefestigkeiten aufweisen und Sicherheitsbestimmungen erfüllen. Durch die vorteilhafte Ausgestaltung und Anordnung der Stabelemente zueinander, sodass eine etwa wabenförmige Durchgangsöffnung ausgebildet wird, wird jedoch die erforderliche Steifigkeit zum Verschieben der Schaltmuffen erreicht.

In einer bevorzugten Ausführungsform wird der Draht bzw die Stabstruktur von einem einzigen Drahtstück ausgebildet. Das heisst, die Schaltgabel wird von nur einem Drahtstück ausgebildet, das entsprechend der Form der Schaltgabel gebogen ist, sodass die Schaltgabel im Wesentlichen einen Halbkreis umspannt.

In einer bevorzugten Ausführungsform ist der Draht oder die Stabstruktur aus Drahtstücken ausgebildet, die einen im Wesentlichen kreisförmigen Querschnitt aufweisen. Der Querschnitt der Stabelemente bzw. der Drahtstücke kann jedoch auch quadratisch, sechseckig oder jede andere polygonale oder kreisartige Querschnittsform aufweisen. Wesentlich ist hierbei nur, dass der Querschnitt dem Draht oder dem Stabelement die entsprechende Biegefestigkeit zum Durchführen der Schaltschiebebewegungen der Schaltgabel bereitstellt, insbesondere im Gabelschenkelabschnitt.

Vorteilhafterweise ist die Schaltgabel mit einer Schaltstange fest verbunden. Die Verbindung wird bevorzugt über eine Schweissverbindung ausgebildet. Es ist jedoch auch möglich, die Schaltgabel in Ausnehmungen in der Schaltstange unterzubringen und diese über jede geeignete Verbindungstechnik ausreichend starr miteinander zu verbinden, wie beispielsweise Schweissen, Kleben und sonstige unlösbarer Verbindungsarten und/oder sonstige lösbaren Verbindungsarten, wie beispielsweise Schraubverbindungen.

### Figurenbeschreibung

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
Figur 1 zeigt eine Draufsicht auf eine Schaltgabel, welche mit einer Schaltstange verbunden ist

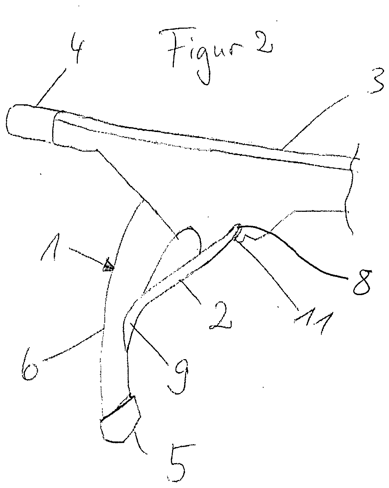

Figur 2 zeigt eine teilweise Seitenansicht der Figur 1.

### Ausführungsbeispiel

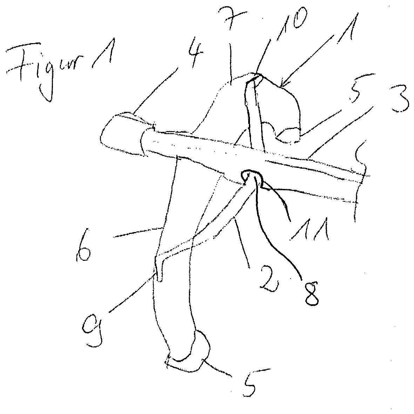

Wie aus Figur 1 ersichtlich, ist eine erfindungsgemässe Schaltgabel 1 dargestellt, die fest vorzugsweise durch Schweissen an einer Schaltstange 3 angebracht ist. Die Verbindung zwischen Schaltgabel 1 und Schaltstange 3 kann jedoch auch über Kleben oder sonstige nichtlösbare und lösbare Verbindungen ausgebildet sein.

Weiter ist in der Figur 1 zu erkennen, wie die Schaltgabel 1 in einen ersten Gabelschenkelabschnitt 6 und einen zweiten Gabelschenkelabschnitt 7 unterteilt ist. Ein Draht 2 spreizt sich von dem ersten Gabelschenkelabschnitt 6 ab und verläuft durch eine Ausnehmung 11 der Schaltstange 3 und neigt sich dann wieder dem zweiten Gabelschenkelabschnitt zu.

Jeweils endseitig ist der Draht 2 mit der Schaltgabel 1 über einen ersten Verbindungsbereich 9 und einen zweiten Verbindungsbereich 10 verbunden. Die Verbindung entsteht in diesem Ausführungsbeispiel durch eine Fügetechnik, wie das Schweissen.

Die Schaltgabel weist jeweils endseitig in diesem Ausführungsbeispiel einen Gummipuffer 5 auf. Ausserdem verfügt die Schaltstange 3 ebenfalls über einen Gummipuffer 4.

**Bezugszeichenliste**

| | | | | | |
|---|---|---|---|---|---|
| 1 | Schaltgabel | 34 | | 67 | |
| 2 | Draht | 35 | | 68 | |
| 3 | Schaltstange | 36 | | 69 | |
| 4 | Gummipuffer | 37 | | 70 | |
| 5 | Gummipuffer | 38 | | 71 | |
| 6 | 1.Gabelschenkelabschnitt | 39 | | 72 | |
| 7 | 2.Gabelschenkelabschnitt | 40 | | 73 | |
| 8 | Kopplungsbereich | 41 | | 74 | |
| 9 | Verbindungsbereich | 42 | | 75 | |
| 10 | Verbindungsbereich | 43 | | 76 | |
| 11 | Ausnehmung | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Schaltgabel-Anordnung mit einer Schaltgabel (1) und eine mit dieser fest verbundenen Schaltstange (3) für ein Schaltgetriebe eines Fahrzeugs, wobei die Schaltgabel (1) einen ersten Gabelschenkelabschnitt (6) und einen zweiten Gabelschenkelabschnitt (7) umfasst,
wobei
ein Draht (2) sich von dem ersten Gabelschenkelabschnitt (6) zu dem zweiten Gabelschenkelabschnitt (7) erstreckt und
der Draht (2) einends über einen ersten Verbindungsbereich (9) an dem ersten Gabelschenkelabschnitt (6) angefügt ist und
der Draht (2) andernends über einen zweiten Verbindungsbereich (10) an dem zweiten Gabelschenkelabschnitt (7) angefügt ist,
wobei der Draht (2) einen Kopplungsbereich (8) aufweist, welcher eine Verbindung mit einer Ausnehmung (11) der Schaltstange (3) herstellt, und wobei die Schaltstange (3) zur verbindenden Aufnahme des Kopplungsbereichs (8) des Drahts (2) die Ausnehmung (11) aufweist,
wobei der Draht (2) durch die Ausnehmung (11) verläuft,
**dadurch gekennzeichnet, dass**
der Draht Prägungen aufweist, und die Schaltgabel (1) als flache Blechgabel ausgeführt ist,
wobei diese Prägungen für die Fügeverbindung zu der flachen Blechgabel genutzt werden.

## Claims

1. Shift fork assembly comprising a shift fork (1) and a shift rod (3) firmly connected thereto for a manual transmission of a vehicle, whereby the shift fork (1) comprises a first fork joint section (6) and a second fork joint section (7), whereby a wire (2) extends from the first fork joint section (6) to the second fork joint section (7), and the wire (2) is joined at one end to the first fork joint section (6) via a first connecting section (9) and the wire (2) is joined at the other end to the second fork joint section (7) via a second connecting section (10), whereby the wire (2) has a coupling area (8) which establishes a connection with a recess (11) of the shift rod (3), and whereby the shift rod (3) has the recess (11) for the connecting reception of the coupling area (8) of the wire (2), whereby the wire (2) runs through the recess (11),
**characterized in**
**that** the wire has embossings, and the shift fork (1) is designed as a flat sheet metal fork, whereby these embossings are used for the joining connection to the flat sheet metal fork.

## Revendications

1. Aménagement de fourche de boîte de vitesses avec une fourche de boîte de vitesses (1) et une tige de commutation (3) solidaire de cette dernière pour une boîte de vitesses d'un véhicule, dans lequel la fourche de boîte de vitesses (1) comporte un premier segment de bras de fourche (6) et un deuxième segment de bras de fourche (7), dans lequel
un fil (2) s'étend du premier segment de bras de fourche (6) au deuxième segment de bras de fourche (7), et
le fil (2) est fixé, à une extrémité, par l'intermédiaire d'une première zone de connexion (9), au premier segment de bras de fourche (6), et
le fil (2) est fixé, à l'autre extrémité, par l'intermédiaire d'une deuxième zone de connexion (10) au deuxième segment de bras de fourche (7),
dans lequel le fil (2) présente une zone de couplage (8) qui établit une connexion avec un évidement (11) de la tige de commutation (3), et dans lequel la tige de commutation (3) présente, pour la réception en connexion de la zone de couplage (8) du fil (2), l'évidement (11), dans lequel le fil (2) s'étend à travers l'évidement (11),
**caractérisé par le fait que**
le fil présente des empreintes et la fourche de boîte de vitesses (1) est réalisée sous forme de fourche en tôle plate,
dans lequel ces empreintes sont utilisées pour l'assemblage par aboutement avec la fourche en tôle plate.
